# EUROPÄISCHE PATENTSCHRIFT

(11) **EP 4 382 794 B1**
(45) Veröffentlichungstag und Bekanntmachung des Hinweises auf die Patenterteilung: **28.10.2026**
(21) Anmeldenummer: 23211275.5
(22) Anmeldetag: 21.11.2023
(51) Int. Cl.: F16L 55/168, F16L 55/16

(54) **ABDICHTELEMENT UND VERFAHREN ZUM SCHLIESSEN UND ABDICHTEN EINES LECKS EINES ROHRS**
A SEALING ELEMENT AND A METHOD FOR CLOSING AND SEALING A LEAK IN A PIPE
ÉLÉMENT D'ÉTANCHÉITÉ ET PROCÉDÉ DE FERMETURE ET D'ÉTANCHÉIFICATION D'UNE FUITE D'UN TUYAU

(30) Priorität: 09.12.2022 DE 102022132839
(43) Veröffentlichungstag der Anmeldung: 12.06.2024
(73) Patentinhaber: Plettl, Tobias, 94124 Büchlberg (DE)
(72) Erfinder: Plettl, Tobias, 94124 Büchlberg (DE)
(74) Vertreter: advotec.

(56) Entgegenhaltungen:
- AU-A2- 2019 351 572
- CN-A- 112 483 763
- US-A1- 2008 048 435
- US-A1- 2013 056 104

## Beschreibung

Die vorliegende Erfindung betrifft ein Abdichtelement zum Schließen und Abdichten eines Lecks eines Rohrs, vorzugsweise eines Kunststoffrohrs, insbesondere eines Abwasser- oder Wasserleitungsrohrs. Die Erfindung betrifft ferner ein Verfahren für diese Zwecke.

Erdverlegte Rohre wie zum Beispiel Abwasser- oder Wasserleitungsrohre werden bei Grabungsarbeiten nicht selten beschädigt. Dabei entstehen Löcher (Lecks) in den Rohren, welche natürlich wieder geschlossen werden müssen.

Dies wird bisher dadurch bewerkstelligt, dass die Rohre an den beschädigten Stellen ausgeschnitten und mit Muffen sowie Überbrückungsteilen versehen werden. Aus der DE 20 2015 102 132 U1 ist des Weiteren bekannt, ein beschädigtes Rohr mithilfe einer Reparaturschelle sowie eines Dichtelements zu reparieren.

Die DE 43 14 940 A1 beschreibt ebenfalls die Verwendung einer Schelle, mit deren Hilfe an dem zu reparierenden Rohr eine Kappe befestigt wird, um ein vorhandenes Leck zu schließen.

Die AU 2019 351 572 A2 beschreibt ein Verfahren und eine Vorrichtung zum Reparieren eines beschädigten Rohres. Dabei wird ein Abdichtelement mit einem Mantelteil und einem Dichtteil mittels eines Klebestreifens auf dem zu schließenden Leck befestigt.

US 2013/056104 A1 beschreibt ebenfalls ein Abdichtelement zum Schließen und Abdichten eines Lecks eines Rohres mit einem Mantelteil, welches einstückig mit einem daran angeformten Dichtteil versehen ist. Das Mantelteil und das Dichtteil weisen demnach das gleich Material auf.

All die aus dem Stand der Technik bekannten Vorrichtungen und Verfahren zum Reparieren eines beschädigten Rohrs sind äußert aufwendig und kompliziert und häufig auch unbefriedigend im Hinblick auf eine ausreichende und dauerhafte Dichtwirkung.

Der vorliegenden Erfindung liegt die Aufgabe zugrunde, ein Abdichtelement sowie ein Verfahren zum Abdichten eines beschädigten Rohrs zur Verfügung zu stellen, welche die Nachteile aus dem Stand der Technik überwinden. Der vorliegenden Erfindung liegt insbesondere die Aufgabe zugrunde, ein einfaches und schnelles Schließen und Abdichten eines Lecks eines Rohrs zu ermöglichen.

Diese Aufgabe wird erfindungsgemäß durch ein Abdichtelement mit den Merkmalen des Anspruchs 1 sowie ein Verfahren mit den Merkmalen des Anspruchs 8 gelöst.

Ein Vorteil des erfindungsgemäßen Abdichtelements besteht in seinem einfachen Aufbau aus einem Mantelteil zum Aufsetzen auf das zu reparierende Rohr und einem an der Innenfläche des Mantelteils angeordneten Dichtteil. Zum Schließen und Abdichten eines Lecks muss das Mantelteil lediglich mit seiner Innenfläche auf das zu schließende Leck aufgesetzt werden. Durch die Tatsache, dass das Dichtteil an die Form und Größe des Lecks angepasst ist, kann dieses das Leck perfekt schließen und abdichten. Bei dem Dichtteil handelt es sich um eine flexible und im Wesentlichen wasserdichte Matte, welche mit dem Mantelteil verklebt ist. Eine Gummimatte ist besonders bevorzugt, da diese wasserdicht und nicht spröde ist. Dadurch eignet sich eine Gummimatte besonders zum Abdichten eines zu schließenden Lecks.

Bei einer besonders bevorzugten Ausführungsform des erfindungsgemäßen Abdichtelements ist das Dichtelement formschlüssig in das Leck integrierbar. Um hier ein schnelles und einfaches formschlüssiges Integrieren des Dichtteils in das Leck zu ermöglichen, wird das zu schließende Leck vorher in aller Regel durch Ausschneiden von Rohrmaterial in eine bestimmte Form gebracht, sodass insbesondere ein rechteckig geformtes Dichtteil formschlüssig in die so hergestellte Öffnung integrierbar ist. Einzelheiten zu diesem Schritt werden im Rahmen des erfindungsgemäßen Verfahrens näher erläutert.

Bei einer besonders bevorzugten Ausführungsform des erfindungsgemäßen Abdichtelements weist das Dichtteil eine Dicke auf, welche im Wesentlichen der Dicke der Rohrwand des zu reparierenden Rohrs entspricht. Im montierten Zustand des Abdichtelements schließt das Dichtteil vorzugsweise bündig mit der Innenfläche des Rohrs ab. Auf diese Art und Weise bleibt nach dem Anbringen des Dichtelements am zu reparierenden Rohr eine glatte Rohrinnenwand ohne Unebenheiten, wie beispielsweise Erhebungen oder Vertiefungen zurück.

Bei einer Ausführungsform des erfindungsgemäßen Abdichtelements ist das Mantelteil ein an den Außendurchmesser des zu reparierenden Rohrs angepasste Halbrundrohr, welches vorzugsweise aus demselben Material wie das zu reparierende Rohr gefertigt ist.

Bei einer anderen Ausführungsform des erfindungsgemäßen Abdichtelements ist das Mantelteil in Form einer an die Form und Größe der Rohraußenwand anpassbare flexible Matte oder Folie ausgebildet. Diese lässt sich dann im Bereich des Lecks analog eines Verbands an der Außenfläche des Rohrs anschmiegen.

Bei einer besonders bevorzugten Ausführungsform des erfindungsgemäßen Abdichtelements ist an der Innenfläche des Mantelteils eine Klebstoffschicht zum Verkleben des Mantelteils mit dem zu reparierenden Rohr angeordnet. Dadurch ist es äußerst einfach und schnell möglich, das Abdichtelement auf dem zu reparierenden Rohr zu fixieren. Vorzugsweise ist die Klebstoffschicht mit einer abziehbaren Folie abgedeckt. Zum "Aktivieren" des Abdichtelements muss die Folie dann nur abgezogen werden, um das Abdichtelement auf das Rohr zu kleben.

Das erfindungsgemäße Verfahren umfasst folgende Arbeitsschritte:
a) Bereitstellen eines an die Form und Größe des Rohrs anpassbares Mantelteil zum Aufsetzen auf das Rohr und Abdecken des zu schließenden Lecks;
b) Verkleben eines an die Form und Größe des zu schließenden Lecks angepassten Dichtteils in Form einer flexiblen und im Wesentlichen wasserdichten Matte (7) mit der Innenfläche des Mantelteils;
c) Fixieren des Mantelteils an der Außenfläche des Rohrs derart, dass das Dichtteil von dem zu schließenden Leck aufgenommen wird.

Mit dem erfindungsgemäßen Verfahren ist ein äußerst einfaches und schnelles Schließen und Abdichten eines Lecks eines Rohrs möglich.

Bei einer besonders bevorzugten Variante des erfindungsgemäßen Verfahrens wird vor dem Arbeitsschritt b) folgender Arbeitsschritt durchgeführt:
Überführen des Lecks in eine Öffnung mit einer gewünschten Form und Größe durch Ausschneiden von Rohrmaterial im Bereich des Lecks mittels eines Schneidwerkzeugs, insbesondere einer Säge, wobei das Dichtteil an die Form und Größe der Öffnung angepasst wird. Hierbei wird das zu reparierende Rohr im Bereich des Lecks vorzugsweise der Länge nach aufgeschnitten, so dass zwei parallel zueinander verlaufende Schnittkanten entstehen. Dadurch ist es auf ideale Art und Weise möglich, ein rechteckig ausgebildetes Dichtteil mit entsprechender Größe in die geschaffene Öffnung zu integrieren.

Mit Vorteil wird beim erfindungsgemäßen Verfahren die Dicke des Dichtteils an die Dicke der Rohrwand des zu reparierenden Rohrs angepasst. Dadurch schließt das Dichtteil im montierten Zustand des Abdichtelements bündig mit der Innenfläche des Rohrs ab. Dies hat die bereits oben dargelegten Vorteile einer glatten Rohrwand.

Bei dem Dichtteil handelt es sich vorzugsweise um eine Gummimatte, welche mit dem Mantelteil verklebt ist.

Bei einer Variante des erfindungsgemäßen Verfahrens ist das Mantelteil ein an den Außendurchmesser des zu reparierenden Rohrs angepasstes Halbrundrohr, welches vorzugsweise aus demselben Material wie das zu reparierende Rohr gefertigt ist.

Bei einer anderen Ausführungsform des erfindungsgemäßen Verfahrens ist das Mantelteil in Form einer an die Form der Rohraußenwand anpassbare flexible Matte oder Folie ausgebildet.

Mit Vorteil wird an der Innenfläche des Mantelteils eine Klebstoffschicht zum Verkleben des Mantelteils mit dem zu reparierenden Rohr angeordnet. Diese Klebstoffschicht kann unmittelbar vor dem Aufsetzen des Abdichtelements auf das zu reparierende Rohr an der Innenfläche des Mantelteils angeordnet werden. Bevorzugt ist es aber, dass diese Klebstoffschicht in Form eines doppelklebenden Klebebands an der Innenfläche des Mantelteils angeordnet wird und dadurch auch unabhängig vom Zeitpunkt des Fixierens des Abdichtelements am zu reparierenden Rohr angeordnet werden kann. In diesem Fall weist die Klebstoffschicht nach dem Anordnen am Mantelteil eine abziehbare Folie auf, die unmittelbar vor dem Fixieren am Rohr entfernt werden kann.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1: ein beschädigtes, ein Leck aufweisendes Abwasserrohr;
- Fig. 2: das Rohr gemäß Fig. 1 mit angepasster Öffnung und Abdichtelement (noch nicht montiert);
- Fig. 3: einen Querschnitt durch das Rohr gemäß Fig. 2 im Bereich der zu schließenden Öffnung im mit Hilfe des Abdichtelements reparierten Zustand.

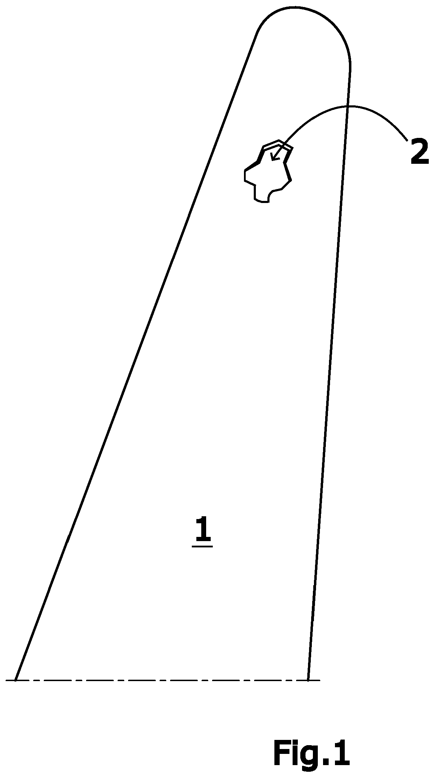

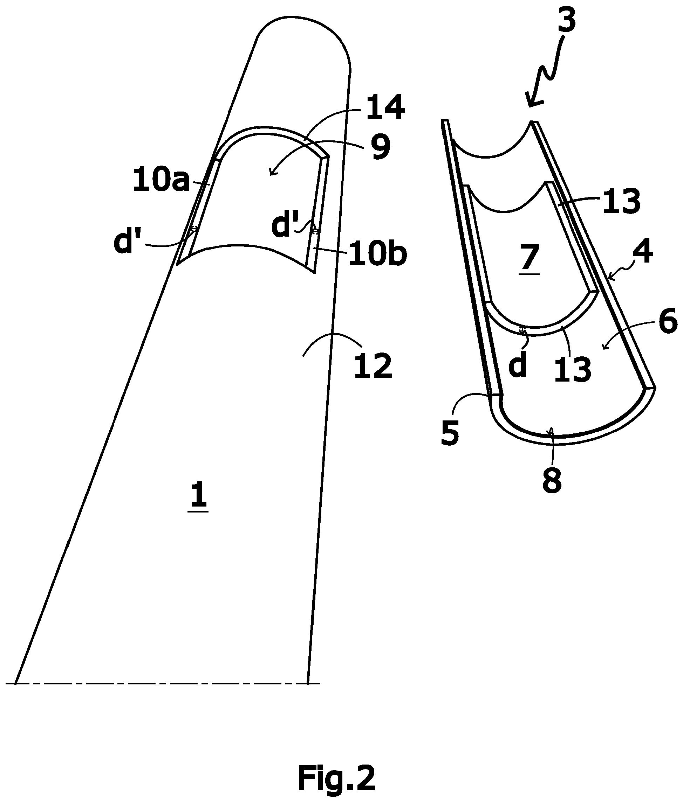

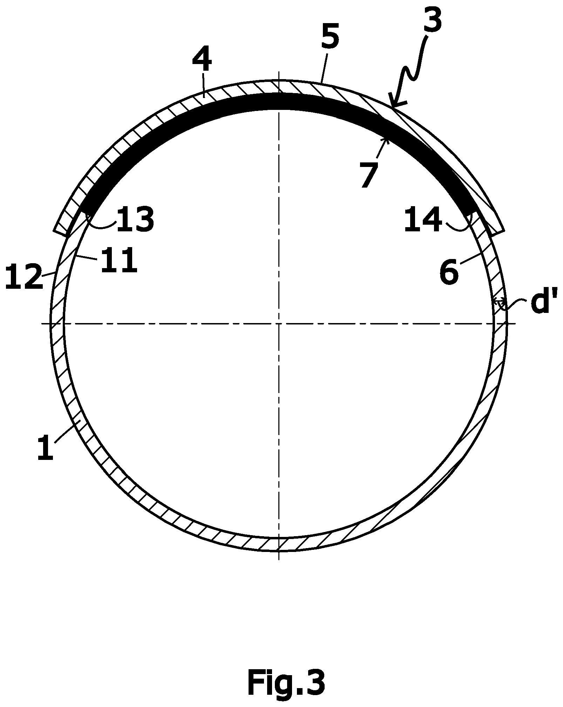

Fig. 1 zeigt eine perspektivische Darstellung eines Abwasserrohrs, welches bei Grabungsarbeiten durch einen Bagger beschädigt wurde. Im vorliegenden Ausführungsbeispiel wurde in dem Abwasserrohr 1 ein Leck 2 verursacht, durch welches Abwasser aus dem Rohr in die Umgebung strömen kann. Dieses Leck wird erfindungsgemäß durch ein Abdichtelement 3, welches in der Fig. 2 perspektivisch und in der Fig. 3 im Querschnitt dargestellt ist, abdichtend geschlossen.

Das Abdichtelement 3 umfasst ein Mantelteil 4 zum Aufsetzen auf das Rohr 1 und Abdecken des zu schließenden Lecks. Das Mantelteil 4 hat eine Außenfläche 5 und eine Innenfläche 6, welche im montierten Zustand dem Rohr 1 zugewandt ist. An der Innenfläche 6 des Mantelteils 4 ist ein Dichtteil 7 angeordnet, welches mit dem Mantelteil 4 mittels Klebstoff verbunden ist. In der vorliegenden Ausführungsform handelt es sich bei dem Dichtteil um eine Gummimatte.

Das Mantelteil ist im vorliegenden Ausführungsbeispiel ein an den Außendurchmesser des Rohrs 1 angepasstes Halbrundrohr 4. Sowohl das Rohr 1 als auch das Mantelteil 4 sind aus thermoplastischem Kunststoff gefertigt.

Die Innenfläche 6 des Mantelteils 4 ist in den nicht vom Dichtteil 7 bedeckten Bereichen mit einer Klebstoffschicht versehen, welche mit einer abziehbaren Folie 8 bedeckt ist. Das Dichtteil 7 weist eine Dicke (d) auf, welche der Dicke (d') der Rohrwand des Rohrs 1 entspricht.

Zum Reparieren des Rohrs 1 mit Hilfe des Abdichtelements 3 wird nun gemäß dem erfindungsgemäßen Verfahren wie folgt vorgegangen.

Zunächst wird ein an die Form und Größe des Rohrs 1 angepasstes Mantelteil 4 zum Aufsetzen auf das Rohr 1 und Abdecken des zu schließenden Lecks bereitgestellt. Zudem wird eine Gummimatte bereitgestellt. Nun wird bei der beschriebenen Verfahrensvariante die Form des Lecks, welche zunächst asymmetrisch ist, in eine passende symmetrische Form mittels einer Elektrosäge geschnitten. Im vorliegenden Ausführungsbeispiel entsteht dabei die Öffnung 9, welche in der Draufsicht rechteckig ausgebildet ist. Die beiden Längskanten 10a und 10b, welche beim Ausschneiden der Öffnung 9 entstehen, sind im Wesentlichen parallel zueinander angeordnet. Nun wird ein der Form und Größe der Öffnung 9 entsprechendes Dichtteil 7 aus der Gummimatte ausgeschnitten und auf die Innenfläche 6 des Mantelteils 4 geklebt. Schließlich wird das Mantelteil 4 mit dem Dichtteil 7 derart an der Außenfläche 12 des Rohrs 1 aufgeklebt, dass das Dichtteil 7 von der Öffnung 9 aufgenommen wird. Dabei liegt der Außenumfang des Dichtteils 7 am Innenumfang der Öffnung 9 an, so dass die Öffnung 9 in ihrem gesamten Umfang abgedichtet und verschlossen wird. Wie in der Fig. 3 besonders gut zu erkennen ist, entspricht die Dicke (d) des Dichtteils 7 der Dicke (d') der Rohrwand des Rohrs 1. Dadurch schließt das Dichtteil 7 bündig mit der Innenfläche 11 des Rohrs 1 ab, so dass nach dem Reparieren des Rohrs eine ebene Innenfläche 11 des Rohrs 1 zurückbleibt.

Wie aus der Fig. 3 ebenfalls hervorgeht, liegt der Rand 13 des Dichtteils 7 im montierten Zustand des Abdichtelements 3 am Rand 14 der Öffnung 9 an, so dass die Öffnung 9 vollumfänglich vom Dichtteil 7 abgedichtet wird.

## Patentansprüche

1. Abdichtelement (3) zum Schließen und Abdichten eines Lecks (2, 9) eines Rohrs, vorzugsweise Kunststoffrohrs, insbesondere eines Abwasser- oder Wasserleitungsrohrs (1), umfassend ein Mantelteil (4) zum Aufsetzen auf das Rohr (1) und Abdecken des zu schließenden Lecks (2, 9) mit einer Außenfläche (5) und einer dem Rohr zugewandten Innenfläche (6), wobei an der Innenfläche (6) des Mantelteils (4) ein Dichtteil (7) zum Abdichten des Lecks (2, 9) angeordnet ist, wobei das Dichtteil (7) im Wesentlichen an die Form und Größe des Lecks (2, 9) angepasst ist, **dadurch gekennzeichnet, dass** das Dichtteil eine flexible und im Wesentlichen wasserdichte Matte ist, welche mit dem Mantelteil (4) verklebt ist.

2. Abdichtelement nach Anspruch 1, **dadurch gekennzeichnet, dass** das Dichtteil (7) formschlüssig in das Leck (2, 9) integrierbar ist.

3. Abdichtelement nach einem der Ansprüche 1 oder 2, **dadurch gekennzeichnet, dass** das Dichtteil (7) eine Dicke (d) aufweist, welche im Wesentlichen der Dicke (d') der Rohrwand des Rohrs (1) entspricht, und im montierten Zustand des Abdichtelements (3) vorzugsweise bündig mit der Innenfläche (11) des Rohrs (1) abschließt.

4. Abdichtelement nach einem der vorhergehenden Ansprüche, **dadurch gekennzeichnet, dass** das Dichtteil eine Gummimatte (7) ist.

5. Abdichtelement nach einem der vorhergehenden Ansprüche, **dadurch gekennzeichnet, dass** das Mantelteil ein an dem Außendurchmesser des zu reparierenden Rohrs (1) angepasstes Halbrundrohr (4) ist, welches vorzugsweise aus demselben Material wie das zu reparierende Rohr (1) gefertigt ist.

6. Abdichtelement nach einem der Ansprüche 1 bis 4, **dadurch gekennzeichnet, dass** das Mantelteil (4) in Form einer an die Form der Außenfläche (12) des Rohrs (1) anpassbare flexible Matte oder Folie ausgebildet ist.

7. Abdichtelement nach einem der vorhergehenden Ansprüche, **dadurch gekennzeichnet, dass** an der Innenfläche (6) des Mantelteils (4) eine Klebstoffschicht zum Verkleben des Mantelteils (4) mit dem zu reparierenden Rohr angeordnet ist, welche vorzugsweise von einer abziehbaren Folie (8) abgedeckt ist.

8. Verfahren zum Schließen und Abdichten eines Lecks (2, 9) eines Rohrs (1) mit einem Abdichtelement (3) nach einem der Ansprüche 1 bis 7, umfassend folgenden Arbeitsschritt:
a) Bereitstellen eines an die Form und Größe des Rohrs (1) anpassbares Mantelteils (4) zum Aufsetzen auf das Rohr (1) und Abdecken des zu schließenden Lecks (2, 9);
**dadurch gekennzeichnet, dass** es folgende weitere Verfahrensschritte umfasst:
b) Verkleben eines an die Form und Größe des zu schließenden Lecks (2, 9) angepassten Dichtteils in Form einer flexiblen und im Wesentlichen wasserdichten Matte (7) mit der Innenfläche (6) des Mantelteils (4);
c) Fixieren des Mantelteils (4) an der Außenfläche (12) des Rohrs (1) derart, dass das Dichtteil (7) von dem zu schließenden Leck (2, 9) aufgenommen wird.

9. Verfahren nach Anspruch 8, **dadurch gekennzeichnet, dass** vor dem Arbeitsschritt b) folgender Arbeitsschritt durchgeführt wird:
Überführen des Lecks (2) in eine Öffnung (9) mit einer gewünschten Form und Größe durch Ausschneiden von Rohrmaterial im Bereich des Lecks (2) mittels eines Schneidwerkzeugs, insbesondere einer Säge, wobei das Dichtteil (7) vorzugsweise an die Form und Größe der Öffnung (9) angepasst wird.

10. Verfahren nach Anspruch 9, **dadurch gekennzeichnet, dass** das Dichtteil (7) vor dem Anbringen am Mantelteil (4) derart an die Öffnung (9) angepasst wird, dass der Rand (13) des Dichtteils (7) vollumfänglich am Rand (14) der Öffnung (9) anliegt.

11. Verfahren nach einem der Ansprüche 8 bis 10, **dadurch gekennzeichnet, dass** die Dicke (d) des Dichtteils (7) an die Dicke (d') der Rohrwand des zu reparierenden Rohrs (1) angepasst wird, so dass das Dichtteil (7) im montiertem Zustand des Abdichtelements (3) bündig mit der Innenfläche (11) des Rohrs (1) abschließt, wobei es sich bei dem Dichtteil vorzugsweise um eine Gummimatte (7) handelt.

12. Verfahren nach einem der Ansprüche 8 bis 11, **dadurch gekennzeichnet, dass** das Mantelteil ein an den Außendurchmesser des zu reparierenden Rohrs (1) angepasstes Halbrundrohr (4) ist, welches vorzugsweise aus demselben Material wie das zu reparierende Rohr (1) gefertigt ist oder, dass das Mantelteil (4) in Form einer an die Form der Außenfläche (12) des Rohrs (1) anpassbare flexible Matte oder Folie ausgebildet ist, wobei an der Innenfläche (6) des Mantelteils (4) vorzugsweise eine Klebstoffschicht zum Verkleben des Mantelteils (4) mit dem zu reparierenden Rohr (1) angeordnet ist, welche vorzugsweise von einer abziehbaren Folie (8) abgedeckt ist.

## Claims

1. A sealing element (3) for closing and sealing a leak (2, 9) in a pipe, preferably a plastic pipe, in particular a sewage or water pipe (1), the sealing element (3) comprising a cladding part (4) for being placed on the pipe (1) and covering the leak (2, 9) to be closed, the cladding part (4) having an outer surface (5) and an inner surface (6) facing the pipe, a sealing part (7) for sealing the leak (2, 9) being disposed on the inner surface (6) of the cladding part (4), the sealing part (7) being essentially adapted to the shape and size of the leak (2, 9), **characterized in that** the sealing part is a flexible and essentially water-tight mat glued to the cladding part (4).

2. The sealing element according to claim 1, **characterized in that** the sealing part (7) is configured for form-fitting integration into the leak (2, 9).

3. The sealing element according to any one of claims 1 or 2, **characterized in that** the sealing part (7) has a thickness (d) essentially corresponding to the thickness (d') of the pipe wall of the pipe (1) and is preferably flush with the inner surface (11) of the pipe (1) when the sealing element (3) is installed.

4. The sealing element according to any one of the preceding claims, **characterized in that** the sealing part is a rubber mat (7).

5. The sealing element according to any one of the preceding claims, **characterized in that** the cladding part is a semi-circular pipe (4) adapted to the outer diameter of the pipe (1) to be repaired, the semi-circular pipe (4) being preferably made of the same material as the pipe (1) to be repaired.

6. The sealing element according to any one of claims 1 to 4, **characterized in that** the cladding part (4) is realized in the form of a flexible mat or film adaptable to the shape of the outer surface (12) of the pipe (1).

7. The sealing element according to any one of the preceding claims, **characterized in that** an adhesive layer for gluing the cladding part (4) to the pipe to be repaired is disposed on the inner surface (6) of the cladding part (4), the adhesive layer being preferably covered by a peel-off film (8).

8. A method for closing and sealing a leak (2, 9) in a pipe (1) using a sealing element (3) according to any one of claims 1 to 7, the method comprising the following step:
a) providing a cladding part (4) for being placed on the pipe (1) and covering the leak (2, 9) to be closed, the cladding part (4) being adaptable to the shape and size of the pipe (1);
**characterized in that** the method further comprises the following steps:
b) gluing a sealing part, which is in the form of a flexible and essentially water-tight mat (7) and adapted to the shape and size of the leak (2, 9) to be closed, to the inner surface (6) of the cladding part (4);
c) fixing the cladding part (4) on the outer surface (12) of the pipe (1) in such a manner that the sealing part (7) sits in the leak (2, 9) to be closed.

9. The method according to claim 8, **characterized in that** step b) is preceded by the following step:
turning the leak (2) into an opening (9) of a desired shape and size by cutting away pipe material in the area of the leak (2) using a cutting tool, in particular a saw, the sealing part (7) being preferably adapted to the shape and size of the opening (9) in the process.

10. The method according to claim 9, **characterized in that** prior to being attached to the cladding part (4), the sealing part (7) is adapted to the opening (9) in such a manner that an edge (13) of the sealing part (7) is in full circumferential contact with an edge (14) of the opening (9).

11. The method according to any one of claims 8 to 10, **characterized in that** the thickness (d) of the sealing part (7) is adapted to the thickness (d') of the pipe wall of the pipe (1) to be repaired so that the sealing part (7) is flush with the inner surface (11) of the pipe (1) when the sealing element (3) is installed, the sealing part preferably being a rubber mat (7).

12. The method according to any one of claims 8 to 11, **characterized in that** the cladding part is a semi-circular pipe (4) adapted to the outer diameter of the pipe (1) to be repaired, the semi-circular pipe (4) being preferably made of the same material as the pipe (1) to be repaired, or **in that** the cladding part (4) is realized in the form of a flexible mat or film adaptable to the shape of the outer surface (12) of the pipe (1), an adhesive layer for gluing the cladding part (4) to the pipe (1) to be repaired being preferably disposed on the inner surface (6) of the cladding part (4), the adhesive layer being preferably covered by a peel-off film (8).

## Revendications

1. Élément d'étanchéité (3) destiné à fermer et étancher une fuite (2, 9) dans un tuyau, de préférence un tuyau plastique, notamment un tuyau (1) d'eau ou d'eaux résiduaires, l'élément d'étanchéité (3) comprenant une pièce de gaine (4) destinée à être placée sur le tuyau (1) et à couvrir la fuite (2, 9) à fermer, la pièce de gaine (4) ayant une surface extérieure (5) et une surface intérieure (6) tournée vers le tuyau, une pièce de joint (7) destinée à étancher la fuite (2, 9) étant disposée sur la surface intérieure (6) de la pièce de gaine (4), la pièce de joint (7) étant essentiellement adaptée à la forme et à la taille de la fuite (2, 9), **caractérisé en ce que** la pièce de joint est un tapis souple et essentiellement étanche à l'eau qui est collé sur la pièce de gaine (4).

2. Élément d'étanchéité selon la revendication 1, **caractérisé en ce que** la pièce de joint (7) est configurée pour être intégrée dans la fuite (2, 9) par complémentarité de forme.

3. Élément d'étanchéité selon l'une quelconque des revendications 1 ou 2, **caractérisé en ce que** la pièce de joint (7) présente une épaisseur (d) qui correspond essentiellement à l'épaisseur (d') de la paroi du tuyau (1) et qui affleure de préférence la surface intérieure (11) du tuyau (1) lorsque l'élément d'étanchéité (3) est monté.

4. Élément d'étanchéité selon l'une quelconque des revendications précédentes, **caractérisé en ce que** la pièce de joint est un tapis en caoutchouc (7).

5. Élément d'étanchéité selon l'une quelconque des revendications précédentes, **caractérisé en ce que** la pièce de gaine est un demi-tube (4) adapté au diamètre extérieur du tuyau (1) à réparer, le demi-tube étant de préférence fabriqué dans le même matériau que le tuyau (1) à réparer.

6. Élément d'étanchéité selon l'une quelconque des revendications 1 to 4, **caractérisé en ce que** la pièce de gaine (4) se présente sous la forme d'un tapis ou d'un film souple pouvant s'adapter à la forme de la surface extérieure (12) du tuyau (1).

7. Élément d'étanchéité selon l'une quelconque des revendications précédentes, **caractérisé en ce qu'**une couche adhésive destinée à coller la pièce de gaine (4) sur le tuyau à réparer est disposée sur la surface intérieure (6) de la pièce de gaine (4), la couche adhésive étant de préférence recouverte d'un film pelable (8).

8. Procédé de fermeture et d'étanchement d'une fuite (2, 9) dans un tuyau (1) utilisant un élément d'étanchéité (3) selon l'une quelconque des revendications 1 à 7, le procédé comprenant l'étape consistant à :
a) mettre à disposition une pièce de gaine (4) destinée à être placée sur le tuyau (1) et couvrir la fuite (2, 9) à fermer, la pièce de gaine (4) étant adaptable à la forme et à la taille du tuyau (1) ;
**caractérisé en ce que** le procédé comprend en outre les étapes consistant à :
b) coller une pièce de joint, qui se présente sous la forme d'un tapis (7) souple et essentiellement étanche à l'eau et qui est adaptée à la forme et à la taille de la fuite (2, 9) à fermer, sur la surface intérieure (6) de la pièce de gaine (4) ;
c) fixer la pièce de gaine (4) sur la surface extérieure (12) du tuyau (1) de telle manière que la pièce de joint (7) s'incorpore dans la fuite (2, 9) à fermer.

9. Procédé selon la revendication 8, **caractérisé en ce que** l'étape b) est précédée par l'étape consistant à :
transformer la fuite (2) en une ouverture (9) présentant une forme et une taille désirées en découpant du matériau du tuyau au niveau de la fuite (2) à l'aide d'un outil de coupe, notamment une scie, la pièce de joint (7) étant de préférence adaptée à la forme et à la taille de l'ouverture (9).

10. Procédé selon la revendication 9, **caractérisé en ce qu'**avant d'être mise en place sur la pièce de gaine (4), la pièce de joint (7) est adaptée à l'ouverture (9) de telle manière qu'un bord (13) de la pièce de joint (7) repose sur toute sa circonférence contre un bord (14) de l'ouverture (9).

11. Procédé selon l'une quelconque des revendications 8 à 10, **caractérisé en ce que** l'épaisseur (d) de la pièce de joint (7) est adaptée à l'épaisseur (d') de la paroi du tuyau (1) à réparer de sorte que la pièce de joint (7) affleure la surface intérieure (11) du tuyau (1) lorsque l'élément d'étanchéité (3) est monté, la pièce de joint étant de préférence un tapis en caoutchouc (7).

12. Procédé selon l'une quelconque des revendications 8 à 11, **caractérisé en ce que** la pièce de gaine est un demi-tube (4) adapté au diamètre extérieur du tuyau (1) à réparer, le demi-tube étant de préférence fabriqué dans le même matériau que le tuyau (1) à réparer, ou **en ce que** la pièce de gaine (4) se présente sous la forme d'un tapis ou d'un film souple pouvant s'adapter à la forme de la surface extérieure (12) du tuyau (1), une couche adhésive destinée à coller la pièce de gaine (4) sur le tuyau (1) à réparer étant de préférence disposée sur la surface intérieure (6) de la pièce de gaine (4), la couche adhésive étant de préférence recouverte d'un film pelable (8).
